# EUROPÄISCHE PATENTANMELDUNG

(11) **EP 1 209 397 A1**
(43) Veröffentlichungstag der Anmeldung: **29.05.2002**
(21) Anmeldenummer: 01124831.7
(22) Anmeldetag: 18.10.2001
(51) Int. Cl.: F16L 3/22

(54) **Haltevorrichtung für schlauchförmige Elemente**

(30) Priorität: 23.11.2000 DE 20019971 U; 08.12.2000 DE 10061009
(71) Anmelder: Gerich, Adam, 74405 Gaildorf (DE)
(72) Erfinder: Gerich, Adam, 74405 Gaildorf (DE)
(74) Vertreter: Clemens, Gerhard, Dr.-Ing.

(57) **Zusammenfassung**

Eine Haltevorrichtung (10) für schlauchförmige Elemente, insbesondere Wellrohre, mit einer Basis (12) und zwei an der Basis (12) angeformten, elastisch aufweitbaren, beabstandeten Backenelementen (14), wobei die Backenelemente (14) und die Basis (12) eine teilkreisförmige Innenkontur (16, 18) aufweisen, die ein schlauchförmiges Element in zwischen die Backenelemente (14) eingedrücktem Zustand in einem vorgegebenen Umfangswinkel, insbesondere in einem Winkel von größer als 180° (Altgrad), umgibt, und an der Basis (12) eine durchgehende Ausnehmung (36) für ein Befestigungsmittel vorhanden ist, zeichnet sich dadurch aus, dass an einer Seitenaußenwand (20) eine erste Vorsprungeinheit (24) angeformt ist, an der gegenüberliegenden Seitenaußenwand (22) eine offene Wandausnehmung (26) vorhanden ist, derart, dass in die Wandausnehmung (26) eine erste Vorsprungeinheit (24) einer seitlich benachbarten Haltevorrichtung (10) hintergreifend eingeschoben werden kann, so dass Seitenwand an Seitenwand liegt und/oder im freien Stirnendbereich zumindest eines Backenelements (14) eine zweite Vorsprungeinheit (28) angeformt ist, auf der dem Stirnendbereich gegenüberliegenden Unterseite der Basis (12) eine Nut (30) vorhanden ist, deren Innenkontur im Wesentlichen der Außenkontur der zweiten Vorsprungeinheit (28) entspricht, derart, dass in die Nut (30) die zweite Vorsprungeinheit (28) einer unterseitig benachbarten Haltevorrichtung (10) eingeschoben werden kann, so dass der Stirnendbereich einer Haltevorrichtung an der Basis (12) einer benachbarten Haltevorrichtung unterseitig anliegt.

## Beschreibung

### TECHNISCHES GEBIET

Die vorliegende Erfindung betrifft eine Haltevorrichtung für schlauchförmige Elemente, insbesondere Wellrohre, mit einer Basis und zwei an der Basis angeformten, elastisch aufweitbaren, beabstandeten Backenelementen, wobei die Backenelemente und die Basis eine teilkreisförmige Innenkontur aufweisen, die ein schlauchförmiges Element in zwischen die Backenelemente eingedrücktem Zustand in einem vorgegebenen Umfangswinkel, insbesondere in einem Winkel von größer als 180° (Altgrad), umgibt, und an der Basis eine durchgehende Ausnehmung für ein Befestigungsmittel vorhanden ist.

Zu Abschirmzwecken werden Leitungen, wie elektrische Leitungen, Datenleitungen, hydraulische oder pneumatische Leitungen, innerhalb von Rohren, insbesondere Wellrohren, geführt, damit sie vor Umwelteinflüssen weitestgehend geschützt sind. Im Bereich des Anschlusses der Leitungen sind die zugehörigen schlauchförmigen Elemente zuverlässig an einer Unterkonstruktion oder innerhalb eines Schaltschrankes zu befestigen.

### STAND DER TECHNIK

Es sind Haltevorrichtungen der eingangs genannten Art bekannt, die in ihrem Seitenbereich lochförmige Ausnehmungen aufweisen, derart, dass bei benachbart angeordneten Haltevorrichtungen ein U-förmiges einzelnes Rastelement in die Ausnehmungen rastend eingeschoben werden kann, um eine gehäusemäßige Koppelung benachbarter Haltevorrichtungen zu erzielen. Die Rasteinheiten sind relativ instabil und neigen zum Abbrechen. Darüber hinaus ist die Montage relativ aufwendig, da die Rastelemente als separate Einzelteile vorrätig gehalten und individuell montiert werden müssen.

### DARSTELLUNG DER ERFINDUNG

Ausgehend von dem genannten Stand der Technik liegt der vorliegenden Erfindung die Aufgabe beziehungsweise das technische Problem zugrunde, eine Haltevorrichtung der eingangs genannten Art anzugeben, die in bewährter Art und Weise einen zuverlässigen, rastenden Anschluss des schlauchförmigen Elements an der Haltevorrichtung selbst gewährleistet, die montagefreundlich ist, die eine einfache Kombination nebeneinander, über- oder untereinander angeordneter Haltevorrichtungen ermöglicht, eine zuverlässige Befestigung an der Unterkonstruktion erlaubt und wirtschaftlich hergestellt und eingesetzt werden kann.

Die erfindungsgemäße Haltevorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Haltevorrichtung ist demgemäß dadurch gekennzeichnet, dass an einer Seitenaußenwand eine erste Vorsprungeinheit angeformt ist, an der gegenüberliegenden Seitenaußenwand eine offene Wandausnehmung vorhanden ist, derart, dass in die Wandausnehmung eine erste Vorsprungeinheit einer seitlich benachbarten Haltevorrichtung hintergreifend eingeschoben werden kann, so dass Seitenwand an Seitenwand liegt und/oder im freien Stirnendbereich zumindest eines Backenelements eine zweite Vorsprungeinheit angeformt ist, auf der dem Stirnendbereich gegenüberliegenden Unterseite der Basis eine Nut vorhanden ist, deren Innenkontur im Wesentlichen der Außenkontur der zweiten Vorsprungeinheit entspricht, derart, dass in die Nut die zweite Vorsprungeinheit einer unterseitig benachbarten Haltevorrichtung eingeschoben werden kann, so dass der Stirnendbereich einer Haltevorrichtung an der Basis einer benachbarten Haltevorrichtung unterseitig anliegt.

Durch das Vorsehen der ersten Vorsprungeinheit in Verbindung mit der offenen Wandausnehmung und/oder der zweiten Vorsprungeinheit in Verbindung mit der Nut ist eine montagetechnisch besonders freundliche und einfache formschlüssige Montage benachbarter, über- oder untereinander angeordneter Haltevorrichtungen problemlos möglich.

Zu besonders stabilen Verbindungsverhältnissen benachbarter Haltevorrichtungen gelangt man dadurch, dass die erste Vorsprungeinheit und die Wandausnehmung über die halbe Breite der Seitenaußenwand vorhanden sind.

In die gleiche Richtung geht eine alternative Ausgestaltung für die oberseitig beziehungsweise unterseitig miteinander verbundenen Haltevorrichtungen, die sich dadurch auszeichnet, dass die zweite Vorsprungeinheit und die Nut über die gesamte Breite des Stirnendbereichs des Backenelements beziehungsweise der Basis vorhanden sind.

Eine montagetechnisch besonders vorteilhafte Ausgestaltung zeichnet sich dadurch aus, dass vom Stirnendbereich der Backenelemente in Einsteckrichtung des schlauchförmigen Elementes gesehen ein Ansetzbereich vorhanden ist, bei dem die lichte Innenkonturbreite zwischen den Backenelementen zunächst abnimmt und dann in die Teilkreiskontur übergeht. Dabei kann sich in vorteilhafter Art und Weise die lichte Innenkonturbreite linear vermindern, d.h. es ist in Einsteckrichtung eine nach innen weisende Schräge vorhanden, die eine besonders einfache Herstellung der Haltevorrichtung gewährleistet.

Eine besonders bevorzugte Ausgestaltung, die bereits im Montagezustand eine gewisse Fixierung eines angesetzten beziehungsweise eingesetzten Wellrohres gewährleistet und darüber hinaus im montierten Zustand eine Relativbewegung zwischen eingesetztem Wellrohr und der Haltevorrichtung zuverlässig verhindert, zeichnet sich dadurch aus, dass im Ansetzbereich und/oder zumindest bereichsweise an den Innenkonturen zumindest eine nach innen weisende Rippe angeformt ist, die in ein Wellental eines Wellrohres eingreift.

Ein besonders guter Formschluss benachbarter Haltevorrichtungen wird dadurch erzielt, dass die erste Vorsprungeinheit eine T-förmige Außenkontur aufweist. Ein guter Formschluss über- beziehungsweise untereinander angeordneter Haltevorrichtungen wird dadurch gewährleistet, dass die zweite Vorsprungeinheit und die Nut eine L-förmige Außenbeziehungsweise Innenkontur aufweisen, die ein einfaches formschlüssiges Einführen aneinandergrenzender Haltevorrichtungen ermöglicht.

Um eine dauerhafte zuverlässige Fixierung aneinandergrenzender Haltevorrichtungen zu gewährleisten, zeichnet sich eine besonders vorteilhafte Ausführungsvariante dadurch aus, dass an der ersten Vorsprungeinheit beziehungsweise an der Ausnehmung und/oder an der zweiten Vorsprungeinheit beziehungsweise in der Nut eine Rasteinheit beziehungsweise eine Gegenrasteinheit an- beziehungsweise eingeformt ist, wobei die Rasteinheit beispielsweise als Rastvorsprung und die Gegenrasteinheit als Schlitz ausgebildet sein kann oder die Rasteinheit als Noppe und die Gegenrasteinheit als Vertiefung an der jeweiligen Vorsprungeinheit beziehungsweise Nut vorhanden sein kann.

Um ein zu starkes Aufweiten der Backenelemente oder ein Lösen des zwischen den Backenelementen eingerasteten schlauchförmigen Elementes zuverlässig zu verhindern, zeichnet sich eine besonders bevorzugte Ausgestaltung dadurch aus, dass ein Deckelelement vorhanden ist, das unterseitig den Nuten der Basis entsprechende Nute aufweist, so dass das Deckelelement auf die zweiten Vorsprungeinheiten lösbar und insbesondere rastbar aufschiebbar ist.

Um eine dauerhaft zuverlässige, montagetechnisch problemlos durchzuführende Verrastung benachbarter Haltevorrichtungen zu gewährleisten, zeichnet sich eine bevorzugte Ausgestaltung dadurch aus, dass in dem Bereich, in dem die Rasteinheit der ersten Vorsprungeinheit die Wandung der Basis hintergreift, ein weiterer Schlitz in der Wandung vorhanden ist. Durch das Vorsehen eines weiteren Schlitzes erhält die Wandung im Bereich der hintergreifenden Rasteinheit eine gewisse Elastizität, die den Einrastvorgang fördert.

Eine besonders vorteilhafte Ausführungsvariante der erfindungsgemäßen Haltevorrichtung zeichnet sich dadurch aus, dass eine Flanscheinrichtung vorhanden ist, die dritte Vorsprungeinheiten aufweist, deren Außenkontur im Wesentlichen der Innenkontur der Nut der Basis entspricht, so dass die Flanscheinrichtung auf die Unterseite der Basis unter Formschluss der dritten Vorsprungeinheiten und der Nute aufgeschoben werden kann, wobei die Flanscheinrichtung eine gegenüber der Breite der Basis wesentlich vergrößerte Breite aufweist. Dabei weist die Flanscheinrichtung bevorzugt durchgehende Ausnehmungen zum Anschluss für Befestigungsmittel auf, so dass eine äußerst stabile Verbindung mit der Unterkonstruktion gewährleistet werden kann.

Um einen zuverlässigen Formschluss bei eingeschobener Flanscheinrichtung zu gewährleisten, zeichnet sich eine vorteilhafte Alternative dadurch aus, dass im Bereich der dritten Vorsprungeinheiten außenseitig eine nach oben überstehende Rippe an die Flanscheinrichtung angeformt ist, deren Innenseite bei angeschlossener Flanscheinrichtung an der Außenwandung der Basis anliegt.

Um auch bei aufgeschobener Flanscheinrichtung eine dauerhaft zuverlässige Positionierung zu gewährleisten, weist die dritte Vorsprungeinheit oberseitig eine Rasteinheit oder eine Gegenrasteinheit auf, die mit einer entsprechenden Gegenrasteinheit beziehungsweise Rasteinheit innerhalb der Nute einrastet.

Um die Fixierung der aufgeschobenen Flanscheinrichtung an der Haltevorrichtung weiter zu verbessern, zeichnet sich eine besonders vorteilhafte Weiterbildung dadurch aus, dass die Flanscheinrichtung oberseitig im Bereich der Ausnehmung eine nach oben weisende Vorsprungeinheit aufweist, die bei angeschlossener Flanscheinrichtung formschlüssig in der Ausnehmung der Basis angeordnet ist, wobei die Vorsprunghöhe, ausgehend von der Oberseite der Flanscheinrichtung, in Einschieberichtung ansteigt.

Eine besonders wirtschaftliche Herstellung der Haltevorrichtung wird dadurch ermöglicht, dass die Haltevorrichtung und/oder die Flanscheinrichtung und/oder das Deckelelement als Kunststoffspritzteil ausgebildet ist/sind.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Seitenansicht einer Haltevorrichtung mit einer ersten Vorsprungeinheit und einer Wandausnehmung - angeordnet an gegenüberliegenden Seitenwänden - und zwei oberseitig vorhandenen zweiten Vorsprungeinheiten und zwei unterseitig vorhandenen Nute,
- Fig. 2: schematische Draufsicht auf die Haltevorrichtung gemäß Fig. 1 in Einsteckrichtung E gesehen,
- Fig. 3: schematische Seitenansicht der Haltevorrichtung gemäß Fig. 1 in Pfeilrichtung D gesehen,
- Fig. 4: schematische Ansicht des Details A gemäß Fig. 1,
- Fig. 5: schematische Seitenansicht der Haltevorrichtung gemäß Fig. 1 mit anschließbarem Deckelelement und anschließbarer Flanscheinrichtung (teilweise in Schnittdarstellung, in auseinandergezogener Darstellung,
- Fig. 6: schematische Draufsicht auf die Haltevorrichtung mit Flanscheinrichtung gemäß Fig. 5, jedoch ohne Deckelelement,
- Fig. 7: schematischer Teilquerschnitt im unteren Bereich und Seitenansicht im oberen Bereich der Haltevorrichtung gemäß Fig. 6,
- Fig. 8: schematische Perspektivdarstellung des Details C in Fig. 5, und
- Fig. 9: schematische Seitenansicht von drei miteinander seitlich beziehungsweise oberseitig gekoppelter Haltevorrichtungen gemäß Fig. 1.

### WEGE ZUM AUSFÜHREN DER ERFINDUNG

Das in den Figuren dargestellte Ausführungsbeispiel einer Haltevorrichtung 10 ist als Kunststoffspritzteil ausgebildet. Ausgehend von einer vorhandenen Mittenwandung 54 sind an diese rechtwinklig zur Blattebene nach vorne und hinten ragende Bauteilbegrenzungswände angespritzt, die jeweils zusammen mit der Mittenwandung 54 die Elemente der Haltevorrichtung 10 bilden.

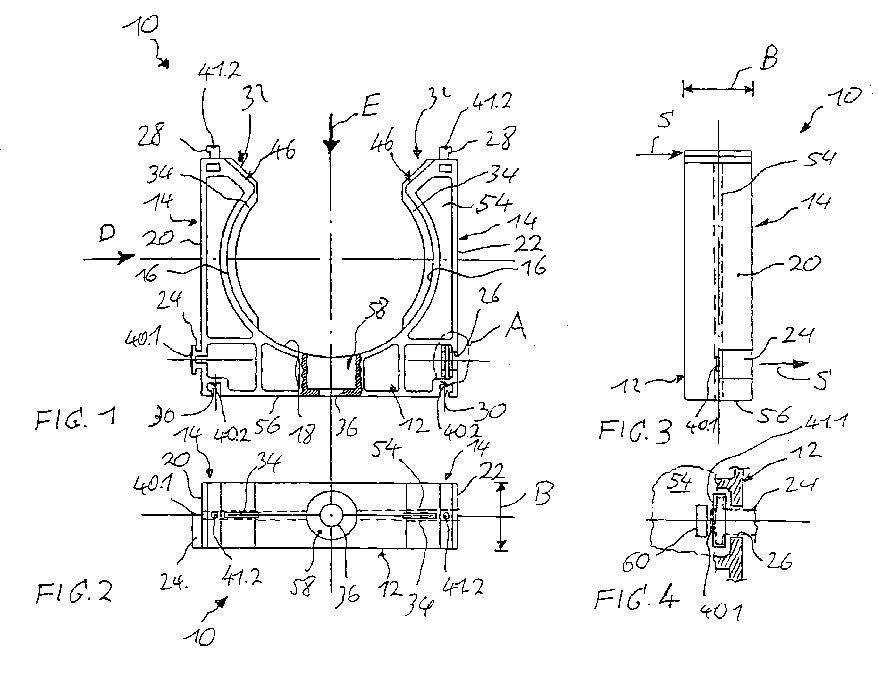

Die Haltevorrichtung 10 besitzt eine Basis 12, an die oberseitig zwei kragarmförmige Backenelemente 14 anschließen. Das in Fig. 1 links dargestellte Backenelement 14 besitzt eine Seitenaußenwandung 20 und das gegenüberliegende Backenelement 14 besitzt eine Seitenaußenwandung 22. Die Basis 12 besitzt eine Unterseite 56.

An der linken Seitenaußenwandung 20 ist im Bereich der Basis 12 eine im Querschnittsprofil gesehen T-förmige erste Vorsprungeinheit 24 angeformt, die sich über die halbe Breite B der Haltevorrichtung 10 erstreckt und in ihrem innenseitigen Endbereich eine außenkonturmäßig überstehende Rasteinheit 40.1 aufweist. Im gegenüberliegenden Bereich der Seitenaußenwandung 22 weist die Haltevorrichtung 10 eine Wandausnehmung 26 auf, die sich ebenfalls über die Hälfte der Breite B der Haltevorrichtung 10 erstreckt. Die zu dem Betrachter hin nach vorne offene Wandausnehmung 26 ist querschnittsmäßig so ausgebildet, dass eine erste Vorsprungeinheit 24 einer benachbarten Haltevorrichtung 10 in die Wandausnehmung 26 durch seitliches Einschieben (Pfeil S) formschlüssig eingebracht werden kann.

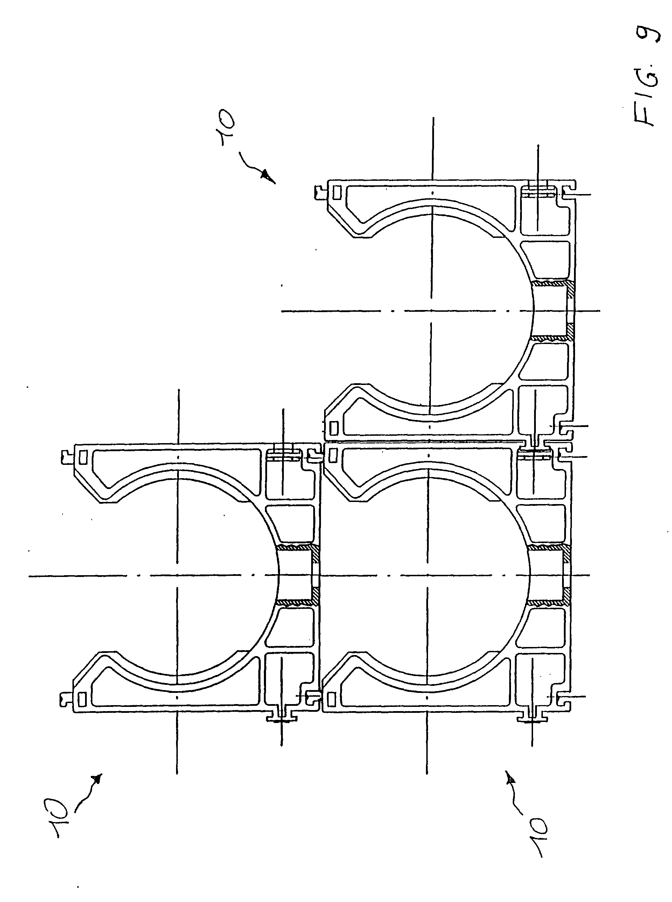

Im Bereich der Wandausnehmung 26 besitzt die Mittenwandung 54 eine als Schlitz ausgebildete Gegenrasteinheit 41.1, die in eingeschobenem Zustand der ersten Vorsprungeinheit 24 von deren Rasteinheit 40.1 lösbar hintergriffen wird. In unmittelbarer Nachbarschaft der Gegenrasteinheit 41.1 ist ein weiterer Schlitz 60 angeordnet, der die elastischen Eigenschaften der Mittenwandung 54 im Bereich der Gegenrasteinheit 41.1 verbessert (siehe Fig. 4).

Die Basis 12 weist weiterhin eine zentrale Sacklochausnehmung 58 auf, die stirnunterseitig eine durchgehende Ausnehmung 36 zum Anschluss beziehungsweise Hindurchführen eines nicht näher dargestellten Befestigungsmittels, insbesondere Befestigungsschraube, aufweist.

Die Backenelemente 14 sind wie bereits erwähnt als an die Basis 12 angeformte Kragträger ausgebildet, die elastisch seitlich nachgiebig ausgebildet sind, so dass in Einführrichtung E ein in den Figuren nicht näher dargestelltes schlauchförmiges Element rastend eingedrückt werden kann. Hierzu besitzen die Backenelemente 14 eine teilkreisförmige Innenkontur 16, die an eine teilkreisförmige Innenkontur 18 der Basis 12 anschließt. Die Innenkonturen 16 und 18 sind dabei so ausgebildet, dass sie einen nach oben offenen Teilkreis mit ca. 270° (Altgrad) Umfangswinkel aufweisen, damit das einzusetzende schlauchförmige Element formschlüssig gehalten werden kann.

Im oberseitigen Stirnendbereich der Backenelemente 14 ist jeweils eine zweite Vorsprungeinheit 28 angeformt, die als nach oben weisende L-förmige Profileinheit ausgebildet ist.

Auf der Unterseite 56 der Basis 12 ist querschnittsmäßig gesehen auf demselben Niveau jeweils eine L-förmige Nut 30 vorhanden, deren Innenkontur im Wesentlichen der Außenkontur der zweiten Vorsprungeinheiten 28 entspricht.

Die zweiten Vorsprungeinheiten 28 besitzen oberseitig eine als Gegenrasteinheit 41.2 ausgebildete Querschnittsvertiefung. Gleichzeitig weisen die Nute 30 querschnittsmäßig in einer formschlüssigen Geometrie als Noppen ausgebildete Rasteinheiten 40.2 aus, die in die Gegenrasteinheiten 41.2 der zweiten Vorsprungeinheiten 28 bei in die Nuten 30 seitlich (Pfeil S) eingeführten zweiten Vorsprungeinheiten 28, d.h. bei übereinander formschlüssig angeordneten Haltevorrichtungen 10, eingreifen.

Die nach oben offenen Enden der Backenelemente 14 weisen zunächst einen Konturenverlauf auf, der eine Verjüngung zum Zentrum der Haltevorrichtung 10 in linearer Art und Weise darstellt. Dadurch entsteht bereichsweise eine nach innen weisende Schräge 32, die einen Ansetzbereich 46 bildet, der für die Montage sehr hilfreich ist, da auf diese Schräge 32 das schlauchförmige Element zunächst positionsmäßig angesetzt werden kann. Die Schräge 32 geht dann mehr oder minder direkt über in die teilkreisförmige Innenkontur 16 der Backenelemente 14.

Gleichzeitig ist im Bereich der Schräge 32 und der Innenkontur 16 der Backenelemente 14 jeweils eine Rippe 34 angeformt, die in das Innere der Haltevorrichtung 10 weist und insbesondere für die Montage von schlauchförmigen Elementen, die als Wellrohre ausgebildet sind, besonders vorteilhaft ist, dahingehend, dass einerseits eine erste Justierung dadurch erfolgt, dass das Wellrohr mit einem entsprechenden Wellenteil auf der Schräge 32 fixierend angesetzt werden kann und anschließend durch Eindrücken in die Einsteckrichtung E absolut zuverlässig in axialer Richtung des Rohres innerhalb der Haltevorrichtung 10 fixiert werden kann. Durch den formschlüssigen Eingriff der Rippen 34 in ein an dem Wellrohr vorhandenes Wellental wird somit eine formschlüssige Justierung des Wellrohres positionsmäßig zuverlässig gewährleistet.

Die erfindungsgemäße Haltevorrichtung 10 gewährleistet einerseits eine im Rahmen einer Montage absolut problemlose Fixierung eines Wellrohres, wobei gleichzeitig aufgrund der konstruktiven Ausgestaltung der Haltevorrichtung 10 im Befestigungsbereich der Haltevorrichtungen 10 an einer nicht näher dargestellten Unterkonstruktion rasterförmig systematische Befestigungsmöglichkeiten für die Haltevorrichtungen 10 an einer Unterkonstruktion zur Verfügung gestellt werden.

Fig. 9 zeigt schematisch die formschlüssige Kombination zweier seitlich nebeneinander angeordneter Haltevorrichtungen 10 und einer oberseitig formschlüssig angeschlossenen Haltevorrichtung 10.

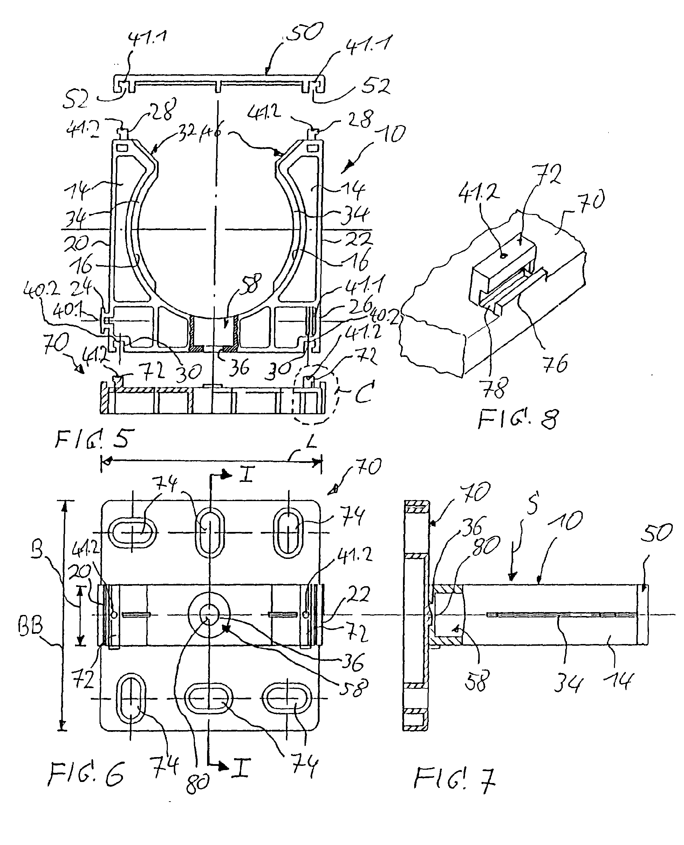

In den Figuren 5 bis 7 ist die Haltevorrichtung 10 mit weiteren anschließbaren Baueinheiten dargestellt. Bezüglich der Haltevorrichtung 10 tragen dieselben Merkmale dieselben Bezugszeichen und werden nicht nochmals erläutert.

So ist es möglich, dass oberseitig auf die Backenelemente 14 ein Deckelelement 50 formschlüssig aufgeschoben wird, das unterseitig entsprechende Nute 52 aufweist. In den Nuten 52 ist entsprechend eine als Noppe ausgebildete Rasteinheit 40.2 vorhanden, die im aufgeschobenen Zustand des Deckelelements 50 in die als Vertiefung ausgebildete Gegenrasteinheit 41.2 der zweiten Vorsprungeinheit 28 rastend eingreift. Dieses Deckelelement 50 trägt zur Fixierung der gesamten Haltevorrichtung 10 bei und verhindert zuverlässig, dass ein einmal eingesetztes schlauchförmiges Element infolge unbeabsichtigter Kräfteeinwirkung aus seiner fixierten Position zwischen den Backenelementen 14 herausspringt.

Weiterhin ist in den Figuren 5 bis 7 eine Flanscheinrichtung 70 dargestellt, die unterseitig an die Basis 12 formschlüssig angeschlossen werden kann. Die Flanscheinrichtung 70 besitzt im Wesentlichen dieselbe Längenabmessung L wie die Haltevorrichtung 10, jedoch weist die Flanscheinrichtung 70 eine Breite BB auf, die deutlich gegenüber der Breite B der Haltevorrichtung 10 vergrößert ausgebildet ist, um eine verbreiterte Basis für die Haltevorrichtung 10 zu bieten. Gleichzeitig weist die Flanscheinrichtung 70 mehrere als Langlöcher ausgebildete Ausnehmungen 74 zum Anschließen von Befestigungsmitteln auf.

Zum formschlüssigen Anschluss der Flanscheinrichtung 70 an die Unterseite 56 der Basis 12 besitzt diese jeweils an dem entsprechenden Seitenbereich nach oben weisende, L-profilförmige Vorsprungeinheiten 72, die formschlüssig in die entsprechende Nut 30 der Haltevorrichtung 10 eingeschoben werden können. Oberseitig weisen die dritten Vorsprungeinheiten 72 ebenfalls eine als Vertiefung ausgebildete Gegenrasteinheit 41.2 auf, in die die Rasteinheit 40.2 der Nut 30 in eingesetztem Zustand rastbar lösbar eingreifen.

Die Detailausbildung im Bereich der dritten Vorsprungeinheit 72 ist in Fig. 8 schematisch dargestellt. In unmittelbarer Nachbarschaft der dritten Vorsprungeinheit 72 ist parallel außenseitig in der oberseitigen Wandung der Flanscheinrichtung 70 ein Schlitz 78 über die Breite der dritten Vorsprungeinheit 72 vorhanden. Außenseitig schließt an den Schlitz 78 eine nach oben weisende Rippe 76 an, die zu Stabilisierungszwecken aufgesteckter Flanscheinrichtungen 70 dient.

Schließlich ist in der Mitte der Flanscheinrichtung 70 oberseitig eine nach oben weisende Vorsprungeinheit 80 vorhanden, die bei auf die Flanscheinrichtung 70 aufgeschobener Haltevorrichtung 10 formschlüssig in die Ausnehmung 36 der Basis 12 der Haltevorrichtung 10 eingreift. Zur Erleichterung des Aufschiebevorgangs nimmt die Querschnittshöhe dieser Vorsprungeinheit 80 von der Oberseite der Flanscheinrichtung 70 ausgehend in einem ersten Bereich zu. Dies bedeutet, dass die Haltevorrichtung 10 gemäß Fig. 7 immer in Pfeilrichtung S auf die Flanscheinrichtung 70 aufgeschoben werden muss.

## Patentansprüche

1. Haltevorrichtung (10) für schlauchförmige Elemente, insbesondere Wellrohre, mit einer Basis (12) und zwei an der Basis (12) angeformten, elastisch aufweitbaren, beabstandeten Backenelementen (14), wobei die Backenelemente (14) und die Basis (12) eine teilkreisförmige Innenkontur (16, 18) aufweisen, die ein schlauchförmiges Element in zwischen die Backenelemente (14) eingedrücktem Zustand in einem vorgegebenen Umfangswinkel, insbesondere in einem Winkel von größer als 180° (Altgrad), umgibt, und an der Basis (12) eine durchgehende Ausnehmung (36) für ein Befestigungsmittel vorhanden ist,
**dadurch gekennzeichnet, dass**
- an einer Seitenaußenwand (20) eine erste Vorsprungeinheit (24) angeformt ist,
- an der gegenüberliegenden Seitenaußenwand (22) eine offene Wandausnehmung (26) vorhanden ist, derart, dass in die Wandausnehmung (26) eine erste Vorsprungeinheit (24) einer seitlich benachbarten Haltevorrichtung (10) hintergreifend eingeschoben werden kann, so dass Seitenwand an Seitenwand liegt und/oder
- im freien Stirnendbereich zumindest eines Backenelements (14) eine zweite Vorsprungeinheit (28) angeformt ist,
- auf der dem Stirnendbereich gegenüberliegenden Unterseite der Basis (12) eine Nut (30) vorhanden ist, deren Innenkontur im Wesentlichen der Außenkontur der zweiten Vorsprungeinheit (28) entspricht, derart, dass in die Nut (30) die zweite Vorsprungeinheit (28) einer unterseitig benachbarten Haltevorrichtung (10) eingeschoben werden kann, so dass der Stirnendbereich einer Haltevorrichtung an der Basis (12) einer benachbarten Haltevorrichtung unterseitig anliegt.

2. Haltevorrichtung nach Anspruch 1,
**dadurch gekennzeichnet, dass**
- die erste Vorsprungeinheit (24) und die Wandausnehmung (26) über die halbe Breite der Seitenaußenwand (20, 22) vorhanden sind.

3. Haltevorrichtung nach Anspruch 1,
**dadurch gekennzeichnet, dass**
- die zweite Vorsprungeinheit (28) und die Nut (30) über die gesamte Breite des Stirnendbereichs des Backenelements (14) beziehungsweise der Basis (12) vorhanden sind.

4. Haltevorrichtung nach einem oder mehreren der vorstehenden Ansprüche,
**dadurch gekennzeichnet, dass**
- vom Stirnendbereich der Backenelemente (14) in Einsteckrichtung (E) des schlauchförmigen Elementes gesehen ein Ansetzbereich (46) vorhanden ist, bei dem die lichte Innenkonturbreite zwischen den Backenelementen (14) zunächst abnimmt und dann in die Teilkreiskontur (16) übergeht.

5. Haltevorrichtung nach Anspruch 4,
**dadurch gekennzeichnet, dass**
- sich die lichte Innenkonturbreite linear vermindert, d.h. eine in Einsteckrichtung (E) nach innen weisende Schräge (32) vorhanden ist.

6. Haltevorrichtung nach Anspruch 4 oder 5,
**dadurch gekennzeichnet, dass**
- im Ansetzbereich (46) und/oder zumindest bereichsweise an den Innenkonturen (16, 18) zumindest eine nach innen weisende Rippe (34) angeformt ist.

7. Haltevorrichtung nach Anspruch 1 oder 2,
**dadurch gekennzeichnet, dass**
- die erste Vorsprungeinheit (24) eine T-förmige Außenkontur aufweist.

8. Haltevorrichtung nach Anspruch 1 oder 3,
**dadurch gekennzeichnet, dass**
- die zweite Vorsprungeinheit (28) und die Nut (30) eine L-förmige Außen- beziehungsweise Innenkontur aufweisen.

9. Haltevorrichtung nach einem oder mehreren der vorstehenden Ansprüche,
**dadurch gekennzeichnet, dass**
- an der ersten Vorsprungeinheit (24) beziehungsweise an der Ausnehmung (26) und/oder an der zweiten Vorsprungeinheit (28) beziehungsweise in der Nut (30) eine Rasteinheit (40.1, 40.2) beziehungsweise eine Gegenrasteinheit (41.1, 41.2) an- beziehungsweise eingeformt ist.

10. Haltevorrichtung nach Anspruch 9,
**dadurch gekennzeichnet, dass**
- die Rasteinheit (40.1) als Rastvorsprung ausgebildet ist und die Gegenrasteinheit (41.1) als Schlitz ausgebildet ist.

11. Haltevorrichtung nach Anspruch 9,
**dadurch gekennzeichnet, dass**
- die Rasteinheit (40.2) als Noppe und die Gegenrasteinheit (41.2) als Vertiefung ausgebildet sind.

12. Haltevorrichtung nach einem oder mehreren der vorstehenden Ansprüche,
**dadurch gekennzeichnet, dass**
- die zweite Vorsprungeinheit (28) auf beiden Stirnendbereichen der Backenelemente (14) und die Nut (30) ebenfalls in beiden Randbereichen der Unterseite der Basis (12) vorhanden sind.

13. Haltevorrichtung nach einem oder mehreren der vorstehenden Ansprüche,
**dadurch gekennzeichnet, dass**
- ein Deckelelement (50) vorhanden ist, das unterseitig den Nuten (30) der Basis (12) entsprechende Nute (52) aufweist, so dass das Deckelelement (50) auf die zweiten Vorsprungeinheiten (28) lösbar und insbesondere rastbar aufschiebbar ist.

14. Haltevorrichtung nach Anspruch 9 oder 10,
**dadurch gekennzeichnet, dass**
- in dem Bereich, in dem die Rasteinheit (40.1) der ersten Vorsprungeinheit (24) die Wandung der Basis (12) hintergreift, ein weiterer Schlitz (60) in der Wandung vorhanden ist.

15. Haltevorrichtung nach einem oder mehreren der vorstehenden Ansprüche,
**dadurch gekennzeichnet, dass**
- eine Flanscheinrichtung (70) vorhanden ist, die dritte Vorsprungeinheiten (72) aufweist, deren Außenkontur im Wesentlichen der Innenkontur der Nut (30) der Basis (12) entspricht, so dass die Flanscheinrichtung (70) auf die Unterseite der Basis (12) unter Formschluss der dritten Vorsprungeinheiten (72) und der Nute (30) aufgeschoben werden kann, wobei die Flanscheinrichtung (70) eine gegenüber der Breite (B) der Basis (12) wesentlich vergrößerte Breite (BB) aufweist.

16. Haltevorrichtung nach Anspruch 15,
**dadurch gekennzeichnet, dass**
- die Flanscheinrichtung durchgehende Ausnehmungen (74) zum Anschluss für Befestigungsmittel aufweist.

17. Haltevorrichtung nach Anspruch 15 oder 16,
**dadurch gekennzeichnet, dass**
- die Länge der dritten Vorsprungeinheiten (72) der Breite (B) der Basis (12) im Wesentlichen entspricht.

18. Haltevorrichtung nach Anspruch 15, 16 oder 17,
**dadurch gekennzeichnet, dass**
- im Bereich der dritten Vorsprungeinheiten (72) außenseitig eine nach oben überstehende Rippe (76) an die Flanscheinrichtung (70) angeformt ist, deren Innenseite bei angeschlossener Flanscheinrichtung (70) an der Außenwandung der Basis (12) anliegt.

19. Haltevorrichtung nach Anspruch 18,
**dadurch gekennzeichnet, dass**
- zwischen der Rippe (76) und der dritten Vorsprungeinheit (72) ein Schlitz (78) vorhanden ist.

20. Haltevorrichtung nach einem oder mehreren der Ansprüche 15 bis 19,
**dadurch gekennzeichnet, dass**
- die dritte Vorsprungeinheit (72) oberseitig eine Rasteinheit oder eine Gegenrasteinheit (41.3) aufweist.

21. Haltevorrichtung nach einem oder mehreren der Ansprüche 15 bis 20,
**dadurch gekennzeichnet, dass**
- die Flanscheinrichtung (70) oberseitig im Bereich der Ausnehmung (36) eine nach oben weisende Vorsprungeinheit (80) aufweist, die bei angeschlossener Flanscheinrichtung formschlüssig in der Ausnehmung (36) der Basis (12) angeordnet ist, wobei die Vorsprunghöhe, ausgehend von der Oberseite der Flanscheinrichtung (70), in Einschieberichtung (S) ansteigt.

22. Haltevorrichtung nach einem oder mehreren der vorstehenden Ansprüche,
**dadurch gekennzeichnet, dass**
- die Haltevorrichtung und/oder die Flanscheinrichtung und/oder das Deckelelement als Kunststoffspritzteil ausgebildet ist/sind.
